# EUROPEAN PATENT APPLICATION

(11) **EP 4 174 597 A1**
(43) Date of publication of application: **03.05.2023**
(21) Application number: 22201936.6
(22) Date of filing: 17.10.2022
(51) Int. Cl.: G05B 19/418

(54) **A METHOD FOR CONFIGURING A FOOD PROCESSING SYSTEM TO PRODUCE A PLURALITY OF FOOD PRODUCTS**

(30) Priority: 29.10.2021 EP 21205678
(71) Applicant: Tetra Laval Holdings & Finance S.A., 1009 Pully (CH)
(72) Inventor: Hansson, Marcus, 29896 Östra Sönnarlöv (SE); Kihlen, Leif, 230 40 Bara (SE); Lessmann, Lisa, 235 35 Vellinge (SE); Gedenryd, Lisa, 246 57 Barsebäck (SE); Magnusson, Tina, 227 31 Lund (SE); Ubiad, Mohammad, 410501 Chakan, Pune (IN)
(74) Representative: Tetra Pak - Patent Attorneys SE

(57) **Abstract**

A computer-implemented method (400) for configuring a food processing system (100) to produce a plurality of food products (102a, 102b) is disclosed. The method (400) comprises retrieving (402) food processing steps (116) linked to the number of food products (102a, 102b) from a recipe database (114), generating (404) a running scheme (120) based on the food processing steps (116), executing (406) the running scheme (120) on a virtual food processing system (200), wherein the virtual food processing system (200) corresponds to the food processing system (100), receiving (408) virtual process output data set (122) from the execution performed in the virtual food processing system (200). In case an acceptance (124) of the virtual process output data set (122) is received (410), uploading (412) the running scheme (120) to the food processing system (100) such that this is configured in accordance to the running scheme (120).

## Description

### Background Art

Today, there is an increasing interest from food producers in automation solutions. There are many reasons for this. One reason is that a well-suited automation system can provide for that food safety is assured. For example, in a dairy, a properly adjusted automation solution in combination with high quality food processing equipment can assure that each batch of milk is adequately heated such that germs, spores and other unwanted microorganisms are killed off. Another reason, linked to the first reason, is that quality consistence can be assured. For instance, in the dairy, by having the automation system, the food safety can be assured at the same time as no or at least small deviations in smell and taste of the food product are achieved. Being able to assure food safety and consistent product quality is key for most food producers.

Automation systems made to assure food safety at the same time as consistent and proper product quality is achieved are well known. It is also known to have automation systems for food production systems made to produce a variety of food products. For instance, some automation systems of today can be used for food production systems made to produce yoghurt, milk, cream etc. Even though there are automation systems made to handle production of several products after one another, there is room for improvement.

For instance, an order in which different food products are produced is important. One reason for this is that the order in which several products are produced has an effect on e.g. food waste. By way of example, producing flavored milk before plain milk will generally generate more food waste than producing the plain milk before the flavored milk. The reason for this is that when producing flavored milk before plain milk, the food production system needs to be cleaned before the plain milk is produced to assure that no flavoring of the plain milk takes place. On the contrary, producing the plain milk before the flavored milk will not in the same way require cleaning. Since cleaning the food production will result in food waste, water usage and possibly cleaning agent usage, the order in which the food products are produced has a direct effect on both cost and environmental footprint.

Another factor to take into account when scheduling production, i.e. determining how the system is to be configured at future time slots, is how maintenance and cleaning can be made as efficiently as possible. By having several process paths it may for instance be possible to clean part of the system at the same time as a different part of the system is used for food production.

As explained above, there are good reasons for having food production systems with several process paths. The downside of the increased versatility is however that the systems are more complex and sometimes difficult for operators to overlook. This may have the effect that the scheduling is made in an inefficient manner, which in turn may result in an inefficient use of utilities, an increased food waste and a longer production time.

Based on the above, even though there are several automation systems available today to assure safe and efficient food production, there is a need for automation systems that can be used for further improving efficiency for complex, multi-process path food production systems.

### Summary

It is an object of the invention to at least partly overcome one or more of the above-identified limitations of the prior art. In particular, it is an object to provide a method and a system for efficiently configuring complex food processing system made to produce several food products in sequence and with parallel process paths.

According to a first aspect it is provided a computer-implemented method for configuring a food processing system to produce a plurality of food products, wherein the food processing system comprises food processing components, storage units, nodes and transport elements, wherein at least two process paths in the food processing system are provided. The method may comprise retrieving food processing steps linked to the number of food products from a recipe database, generating a running scheme based on the food processing steps, wherein the running scheme may comprise a time table for the food processing steps, a link table between the food processing components and the food processing steps and settings for the food processing components, the storage units and the nodes, and executing the running scheme on a virtual food processing system, wherein the virtual food processing system corresponds to the food processing system and comprises virtual food processing components, virtual storage units, virtual nodes and virtual transport elements, receiving virtual process output data set from the execution performed in the virtual food processing system, and in case an acceptance of the virtual process output data set is received, uploading the running scheme to the food processing system such that this is configured in accordance to the running scheme.

Uploading the running scheme should be interpreted broadly in this context. In case the running scheme is determined in a server remote from the food processing system, the running scheme will be transferred from the server to the food processing system, i.e. uploaded to the food processing system. However, it is equally possible to have the food processing system provided with a data processing apparatus configured to perform the steps above. In this latter example, the uploading step is to be construed as providing the running scheme to the different components of the food processing system such that the food processing system is configured according to the running scheme, i.e. uploading the running scheme, or relevant parts of the running scheme, to individual components of the food processing system. Based on the above, the step "uploading the running scheme to the food processing system such that this is configured in accordance to the running scheme" can be replaced by "configuring the food processing system according to the running scheme".

An advantage with having the virtual food processing system is that the running scheme may be tried out in a virtual environment before being implemented in a real-world food processing system. This is generally a benefit, but in particular it is a benefit for food processing systems made to produce different food products after one another and also provided with multiple process paths that at least in part are parallel. Such complex food processing systems are difficult to overlook and there is a risk that negative effects of the running scheme are not identified before the running scheme is implemented in the real word food processing system.

Sharing information and learnings, for instance by using Internet of things (loT) technologies and machine learning (ML) technologies, between different food processing systems is advantageous in that running schemes found beneficial are spread efficiently. However, using information and leanings made in other food processing systems also constitute a risk and even though different measures may be taken to reduce this risk it may be beneficial to have the virtual food processing system to try out the running scheme before making a real-world implementation. The same applies for ideas on how to set up the running scheme made by operators and other personnel involved. Since there is a substantial cost for trying out new ideas in real-world systems, there is a risk that new ideas are not tested, and hence opportunities on how to reduce environmental impact may be lost.

The process paths may be flow paths in case the food product being processed is a liquid food product. It is also possible that the process paths start as flow paths and end as non-flow paths. For instance, in a food processing system in which whey, in liquid form, is dried into whey powder, initial steps of the food processing system may be handling a liquid food product and later steps, after a drying step, may be handling a non-liquid food product.

The food products referred to above may be complex food products defined by a large number of features, such as fat content, colour and viscosity. These different features may be taken into account when retrieving the food processing steps linked to the food product from the recipe database. Put differently and by way of example, there may be a large number ambient white milk products, each of them having with different features. As an effect, different ambient white milk products may be linked to different food processing steps. Having complex food products in this way increases an overall scheduling complexity and as an effect increases the benefit of having the virtual food processing system.

The food processing system may comprise at least two sub-systems formed in a first group of sub-systems shared between the at least two process paths and a second group of sub-systems in which separate sub-systems are provided for the at least two process paths.

The method may further comprise comparing the virtual process output data set with threshold values.

An advantage with comparing with threshold values is that less interesting running scheme may easily be discarded, either automatically or manually. The threshold values may be the current values for e.g. electrical energy usage, steam consumption etc.

The method may further comprise, preceding the step of generating the running scheme, adding or removing one or several of the virtual food processing components.

Understanding the effects of adding e.g. another tank or replacing two minor tanks with one larger tank is often difficult in a complex food processing system. By having the possibility to make changes before the running scheme is generated and tested on the virtual food processing system, such effects can easily be investigated. By having virtual replicas of the different food processing components available, adding a new food processing component to the virtual food processing system can easily be made.

The method may further comprise, preceding the step of generating the running scheme, adding or removing cleaning in place (CIP) steps.

Cleaning is a necessity to assure food safety as well as product quality. However, cleaning too often or too much has the effect that the environmental impact is larger than necessary. By having the possibility to add or remove CIP steps, either by using existing CIP equipment differently or by adding or removing CIP equipment and adapt the cleaning procedure, a tool is made available that provides for that the environmental impact of the food processing system can be improved.

The method may further comprise, preceding the step of generating the running scheme, adding or removing maintenance steps.

By way of example, replacing wear parts too often in the food processing system increases not only the cost for the food producers, but also increases the environmental footprint. On the contrary, replacing the wear parts too seldom may result in a machine breakdown, in turn resulting in food waste and down time. By providing the possibility to add or remove maintenance steps, which may involve cleaning routines made by operators, but also service steps in the form of mechanical overhaul, before the running scheme is generated and tested in the virtual food processing system, it is made possible to find a balance in terms of maintenance that would result in more cost-efficient food production as well as more environmental friendly food production.

The method may further comprise, preceding the step of generating the running scheme, changing an order in which the plurality of food products is to be produced.

The order in which the food products are produced has an effect on both cost and environment. For instance, as explained above, by changing the order, e.g. producing plain milk before flavored milk instead of the opposite, less cleaning may be required, which in turn provides for that the cost and environmental impact may be reduced. Changing the order may be done in different ways. For instance, the different steps may be provided to the operator via graphical user interface (GUI) and the order may be changed by drag-and-drop operations performed by the operator.

The running scheme may comprise a food waste focused running scheme, an electrical energy focused running scheme, a machine break down risk focused running scheme, a minimum production time focused running scheme or a cleaning time focused running scheme.

As explained above, changes may be made by the operator or other persons involved in the operation of the food production system, but the running scheme may also be set automatically by using algorithms made for the purpose. As input to the algorithms generating the running scheme, the operator may provide input on what factors to prioritize. For instance, in case raw material prices have increased dramatically, the operator may request the food waste focused running scheme. The generation of such scheme may e.g. be configured such that reduction of food waste is made at the cost of increased cleaning need and/or additional steam consumption.

The minimum production time focused running scheme can be a running scheme adapted to reduce the production time as much as possible, i.e. a running scheme in which production time is given highest priority.

The recipe database may be communicatively connected to a recipe cloud in turn connected to other recipe databases.

The running scheme database may be communicatively connected to a running scheme cloud in turn connected to other running scheme databases.

The method may further comprise generating at least one alternative running scheme based on the food processing steps, executing the at least one alternative running scheme on the virtual food processing system, capturing at least one alternative virtual process output data set from the execution performed in the virtual food processing system, in case an alternative acceptance of one of the at least one alternative virtual process output data sets is received, making the one of the least one alternative running scheme the running scheme to be uploaded to the food processing system such that this is configured in accordance to this one of the least one alternative running scheme.

As explained above, more than one running scheme may be generated and a user may be provided with several alternatives to choose from before deciding which option to choose and run in the virtual food processing system. An advantage with providing many alternatives is that an alternative that may not be in line with specific requests made by the operator, but still based on learnings made from other similar food processing systems may very well be a good option, can be provided to the user.

The wording running scheme should be construed broadly and it does not have to be limited to the actual equipment. For instance, factors such as labor costs, available storage space, available personnel etc may also be used as basis for the running scheme. By way of example, during night shifts, when fewer operators are available, a different running scheme may be used compared to the running scheme used during day shifts, when more operators are available. In this context, the running scheme may be understood as operational strategy.

According to a second aspect it is provided a data processing system comprising a processor configured to perform the method of the first aspect.

For this second aspect the same advantages that are presented above with reference to the first aspect apply.

The data processing system may comprise a data processing apparatus communicatively connected to a recipe database and/or a running scheme database.

The recipe data base may be communicatively connected to a recipe cloud in turn communicatively connected to recipe databases of other data processing systems, and/or the running scheme database is communicatively connected to a running scheme cloud in turn communicatively connected to running scheme databases of other data processing systems.

According to a third aspect it is provided a computer program product comprising instructions which, when the program is executed by a data processing system, cause the data processing system to carry out the method according to the first aspect.

For this third aspect the same advantages that are presented above with reference to the first aspect apply.

Still other objectives, features, aspects and advantages of the invention will appear from the following detailed description as well as from the drawings.

### Brief Description of the Drawings

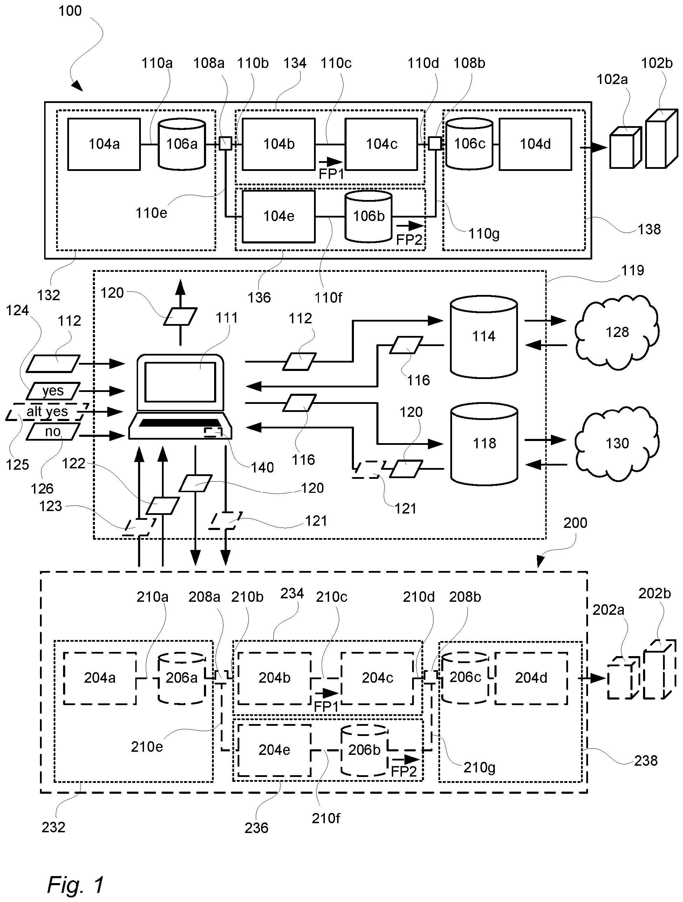

Embodiments of the invention will now be described, by way of example, with reference to the accompanying schematic drawings, in which
Fig. 1 generally illustrates a food processing system, a virtual food processing system and a data processing system arranged to configure the food processing system by using the virtual food processing system.
Fig. 2 illustrates a running scheme in further detail by way of example.
Fig. 3 is a flow chart illustrating a method for configuring a food processing system.

### Detailed Description

Fig .1 generally illustrates a food processing system 100 by way of example. In this particular example, a plurality of different food products 102a, 102b can be produced, herein exemplified by two brick-shaped packages of different size. The food processing system 100 can comprise food processing components 104a-e, storage units 106a-c, nodes 108a-b and transport elements 110a-g. As illustrated, the food processing components 104a-e, the storage units 106a-c, the nodes 108a-b and the transport elements 110a-g can be arranged such that a plurality of process paths PP1, PP2 are formed. Having different process paths provides a versatility such that a wide variety of different products can be produced by the food processing system 100, but also in that for instance that food production can continue even if part of the system 100 is subject to maintenance. In case the food products 102-ab are liquid food products, the storage units 106a-c may be tanks, the nodes 108a-b may be valves and the transport elements 110a-g may be pipes.

A data processing apparatus 111, comprising a processor 140, can be used for configuring the system 100 to produce the food products 102a, 102b. The process for such configuration can start with that a request 112 is received. This request may be received via a user interface or, in case the data processing apparatus 111 is a server, by receiving the request 112 from a client. The request 112 may contain different types of information in various formats, but from the request it can be read which food products that are to be produced.

Once the request 112 has been received, this can be transmitted, either without modification or with modification, to a recipe database 114. The recipe database 114 can comprise information on how to produce different food products. For example, this information may comprise information on how long time a product is to be heated and at which temperature, to what degree the product is to be separated, at what pressure the food product is to be homogenized, which type of packaging material that is to be used, which type of straw that is to be applied, etc, but also different condition parameters linked to product, e.g. for how long time the product can be stored in a tank without being negatively affected. This information is herein referred to as food processing steps 116, and in response to the request 112, the food processing steps 116 are transmitted from the recipe database 114 to the data processing apparatus 111.

Once having the food processing steps 116, i.e. information on how the food product is to be produced, these steps are transmitted to a running scheme database 118. As for the request 112, the food processing steps 116 may either be sent without modification or with modification. As illustrated, the food processing steps 116 can be transmitted from the recipe database 114 via the data processing apparatus 111 to the running scheme database 118. Another option, even though not illustrated, is to have the food processing steps 116 transmitted directly from the recipe database 114 to the running scheme database 118. An advantage of having the data processing apparatus 111 as an intermediate is though that the two databases are not in direct communication. This may be beneficial from a data integrity perspective. For instance, the recipe database 114 may be shared within a company while the running scheme database 118 may be a database provided by a food processing equipment supplier or the like and shared among many companies. Even though the data processing apparatus 111, the recipe database 114 and the running scheme database 118 are illustrated as different units, herein together referred to as data processing system 119, other implementations are also possible. For instance, the data processing apparatus 111 and the recipe database 114 may be comprised in one and the same server, while the running scheme database 118 is comprised on another server. Another option is to have all three in one and the same server. Still an option is to use a server farm and leave it to an external party to choose a suitable hardware setup.

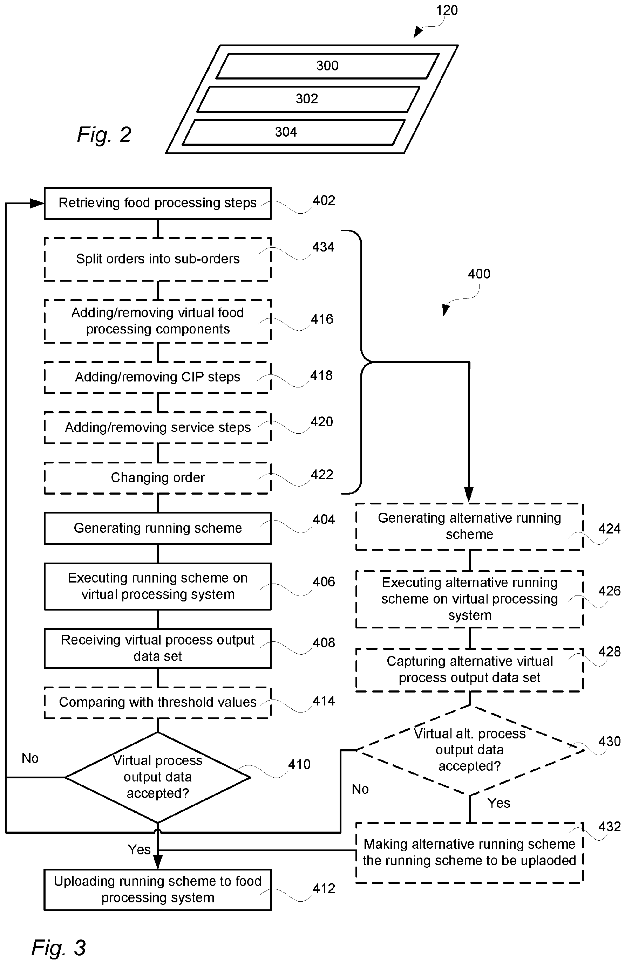

In response to the food processing steps 116 sent to the running scheme database 118, a running scheme 120 can be received by the data processing apparatus 111. As illustrated in fig. 2, the running scheme 120 may comprise a time table 300 for the food processing steps, a link table 302 between the food processing steps and the food processing components 104a-e and settings 304 for the food processing components 104a-e.

The running scheme 120 can thereafter be sent to a virtual food processing system 200, being a digital replica or, put differently, a digital twin of the food processing system 100. In line with the food processing system 100, the virtual food processing system 200 can produce virtual food products 202a-b, corresponding to the food products 102a-b produced by the food processing system 100. Further, the virtual food processing system 200 can comprise virtual food processing components 204a-e, virtual storage units 206-ac, virtual nodes 208a-b and virtual transport elements 210a-g. Once received in the virtual food processing system 200, the running scheme 120 is executed. As output from the execution of the running scheme 120 in the virtual food processing system 200, a virtual process output data set 122 is generated. This data set can comprise any information connected to the execution of the running scheme 120 in the virtual food processing system 200. Since the virtual food processing system 200 is a digital replica, or at least substantially a digital replica, of the food processing system 100, the virtual process output data 122 provides relevant information not only for the virtual food processing system 200, but also for the food processing system 100, i.e. the non-virtual food processing system. The virtual food processing system 200 may be built in parallel with the food processing system 100. For instance, when a new food processing component is added to the food processing system 100, a digital replica of this food processing component may also be provided by a food processing equipment provider such that the virtual food processing system 200 can be upgraded in line with the food processing system 100. By having the running scheme database 118 shared between many food producers, any deviations between the digital replica of a particular food processing component and the food processing component itself may be identified by using e.g. machine learning algorithms or any other algorithms suitable for processing vast amount of data.

The virtual process output data 122 may comprise any information that may be extracted from the virtual food processing system 100, as well as the food processing system 100, such as electrical energy usage, water usage, food waste, packaging material waste, cleaning agent usage, maintenance need, down time due to cleaning, downtime due to maintenance, etc. Since a general understanding may in some cases be sufficient for understanding the effects of the running scheme 122, the virtual food processing system 200 may in these cases be a simplified version of the food processing system 100. As an effect, for these cases the virtual process data set 122 may comprise a sub-set of the information that can be extracted from the food processing system 100.

Further, the virtual process output data 122 may comprise electrical energy usage, steam usage etc. over time for different food processing components, storage units, etc. By including a time aspect, it may be possible for an operator to get a better understanding of the effects of using the running scheme 120 in the food processing system 100.

In addition to the running scheme 120, an alternative running scheme 121 may also be generated. As for the running scheme 120, the alternative running scheme 121 may be input to the virtual processing system 200 and in return an alternative virtual process output data set 123 can be received. An advantage with having two running schemes run on the virtual processing system 200 is that the operator may be provided with two different options, instead of only one. Even though illustrated that one alternative running scheme is evaluated, more than one alternative running scheme is also possible, i.e. more than two options may be provided to the operator.

In case the operator finds the virtual process output data set 122 linked to the running scheme 120 acceptable, an acceptance 124 can be received. In a similar manner, in case the alternative virtual process output data set 123 is found acceptable, an alternative acceptance 125 can be received. Since only one running scheme 120 is to be uploaded to the food processing system 100, either the virtual process output data set 122 or the alternative virtual process output data set 123 is to be accepted.

In case the virtual process data set 122 is not acceptable, and in case the alternative virtual process data set 123 is provided and this is also not found acceptable, a rejection 126 can be received.

As described above, the recipe database 118 may be connected to other recipe databases, herein exemplified by way of a recipe cloud 128, as well as one or several reference recipe databases to make sure that optimal settings can be provided. By having the recipe database 118 connected to the recipe cloud 128 in this way provides for that e.g. learnings made with respect to how to optimally set food processing equipment can quickly and easily be distributed. For instance, if it is found that a holding time for a particular product can be reduced without imposing any food safety risk or food quality degradation, this information may easily and quickly be distributed from one of the reference recipe databases to the recipe database 114 connected via the recipe cloud 128.

In a similar manner, the running scheme database 118 may be connected to a running scheme cloud 130 to provide for e.g. that newly found insights related to the running scheme generation can be distributed easily.

As illustrated, the food processing system 100 can comprise a number of sub-systems; a first sub-system 132, a second sub-system 134, a third sub-system 136, and a fourth sub-system 138. In this particular example being illustrated, the first and fourth sub-system 132, 138, herein referred to as a first group, may be shared by a first process path PP1 and a second process path PP2, i.e. the same food processing components are used for both process paths in this first group. Unlike the first group, a second and a third sub-system 134, 136, forming a second group, are separately used by the first and second process path PP1, PP2. In this particular example, the first process path PP1 is using the second sub-system 134 while the second process path PP2 is using the third sub-system 136. These sub-systems are also reflected in the virtual food processing system 200 in which a virtual first sub-system 232, a virtual second sub-system 234, a virtual third sub-system 236 and a virtual fourth sub-system 238 are provided.

Once having uploaded and configured the food processing system 100 according to the running scheme, sensors may be provided in the food processing system 100 to capture sensor data. This sensor data may be used for feedback purposes. In case the sensor data shows that the actual output from the food processing system 100 does not match the virtual process output data set 122, i.e. the forecasted output made by the virtual processing system 200, this actual output may be used for refining the virtual food processing system 200. In case deviations are severe, i.e. that the actual output significantly differs from the virtual output data set 122, notifications may be issued such that debugging may be initiated. In addition, in case severe deviations are found, the virtual food processing system 200 may be closed until the reasons for the severe deviations have been identified and corrected.

As mentioned above, the running scheme does not have to be limited to the actual equipment, but also to factors such as available storage space may form part of the running scheme. In this way, having access to the virtual food processing system 200, it is made possible to assess different alternatives in which storage space availability is a critical factor. For instance, in case storage availability is taken into consideration, it is possible to compare a first alternative involving large batch production with few changeovers, thereby low operational costs, but with high demand for storage space, i.e. a large area is required for storing, may be compared with a second alternative involving small batch production with many changeovers, thereby high operational costs, but with low demand for storage space. Depending on the operational costs, the storage costs, and also the benefits of higher market service level, which will be an effect of keeping a larger stock according to the first alternative, different outcomes may be achieved. Thus, by not restricting the running scheme to the actual equipment, but also taken into account factors such as storage space, an improved for configuration of the food processing system 100 can be achieved.

Fig. 3 is a flow chart illustrating a method 400 for configuring the food processing system 100 by way of example.

In a first step 402, the food processing steps 116 linked to the food products 102a, 102b can be retrieved from the recipe database 114. As described above, this step may be triggered by that the request 112 together with information about the food products 102a-b is sent to the recipe database 114.

In a second step 404, the running scheme 120 can be generated based on the food processing steps 116.

In a third step 406, the running scheme 120 can be executed on the virtual food processing system 200.

In a fourth step 408, the virtual output data set 122, generated from the execution of the running scheme 120 in the virtual food processing system 200, can be received.

In a fifth step 410, in case the virtual output data set 122 is accepted, i.e. in case it is deemed appropriate to run the food processing system 100 according to the running scheme 120, the running scheme 120 is, in a sixth step 412 uploaded to the food processing system 100.

Optionally, in a seventh step 414, the virtual data output set 122 may be compared with threshold values. The threshold values may be company specific threshold values aligned with e.g. environmental goals. Another option is to have the threshold values set as current values for the food processing system. In this latter case, the comparison will reveal if the running scheme 120, tested on the virtual food processing system 200, would result in an improvement and, in case several values are provided, such as production time, degree of utilization, electrical energy usage, food waste etc., in which way the running scheme 120 would improve current running scheme.

Optionally, in an eighth step 416, virtual food processing components in the virtual food processing system 200 may be added or removed. By changing the virtual food processing system 200 in this way, effects on the food processing system 100 may be tested out in a virtual environment before being implemented in a real-world processing system.

Optionally, in a ninth step 418, CIP steps may be added or removed. By having this possibility, different CIP set ups can be tested out in the virtual environment before being implemented. CIP steps may include how existing CIP equipment can be used, but it may also include adding or removing CIP equipment.

Optionally, in a tenth step 420, maintenance steps may be added or removed. Since the virtual food processing system 200 is a digital replica of the food processing system 100, different maintenance intervals and different maintenance programs may be tested out and evaluated when having access to the virtual food processing system 200.

Optionally, in an eleventh step 422, an order in which the food products are to be produced may be changed. By having the possibility to change this order, different orders may be evaluated before deciding which order to choose for the actual food production.

Optionally, in line with the above, the additional running scheme 121 may be generated in a twelfth step 424. After having generated the alternative running scheme 121, which may be one alternative running scheme or several alternative running schemes, this can in a thirteenth step 426 be executed in the virtual processing system 200. The alternative virtual process output data set 123 from the execution performed in the virtual food processing system 200 can be captured in a fourteenth step 428. In case the alternative acceptance 125 of the alternative virtual process output data sets 123 is received in a fifteenth step 430, the alternative running scheme 121 is made, in a sixteenth step 432, the running scheme 120 to be uploaded to the food processing system 100 such that the food processing system 100 is configured in accordance to the alternative running scheme 121.

Optionally, in a seventeenth step 434, which may be performed subsequent to the first step 402, orders linked to the food products may be received. Based on the orders, which may provide information about when and how much of different products that are to be produced at different time periods, e.g. daily basis, weekly basis, monthly basis, yearly basis, it can be determined how the orders are to be split based on predicted availability of the food processing system 100, predicted available storage space etc. After having split the orders into sub-orders, running schemes for the different sub-orders may be determined.

Even though the steps above are presented in a certain order, other orders may also be possible.

Even though liquid food products are used as examples above, the principles and disclosure presented above are not restricted to such food products, but can also be applied to other types of food products, such as, but not limited to, powder production, cheese production, and ice cream production. Further, the principles may be applied both on continuous production and batch production, and discrete products as well as non-discrete products.

From the description above follows that, although various embodiments of the invention have been described and shown, the invention is not restricted thereto, but may also be embodied in other ways within the scope of the subject-matter defined in the following claims.

## Claims

1. A computer-implemented method (400) for configuring a food processing system (100) to produce a plurality of food products (102a, 102b), wherein the food processing system (100) comprises food processing components (104a-e), storage units (106a-c), nodes (108a-b) and transport elements (110a-g), wherein at least two process paths (PP1, PP2) in the food processing system (100) are provided, said method (400) comprising
retrieving (402) food processing steps (116) linked to the number of food products (102a, 102b) from a recipe database (114),
generating (404) a running scheme (120) based on the food processing steps (116), wherein the running scheme (120) comprises a time table (300) for the food processing steps (116), a link table (302) between the food processing components (104a-e) and the food processing steps (116) and settings (304) for the food processing components (104a-e), the storage units (106a-b) and the nodes (108a-b),
executing (406) the running scheme (120) on a virtual food processing system (200), wherein the virtual food processing system (200) corresponds to the food processing system (100) and comprises virtual food processing components (104a-e), virtual storage units (206a-b), virtual nodes (208a-b) and virtual transport elements (21 0a-g),
receiving (408) virtual process output data set (122) from the execution performed in the virtual food processing system (200),
in case an acceptance (124) of the virtual process output data set (122) is received (410),
uploading (412) the running scheme (120) to the food processing system (100) such that this is configured in accordance to the running scheme (120).

2. The method according to claim 1, wherein the food processing system (100) comprises at least two sub-systems (132, 134, 136, 138) formed in a first group of sub-systems (132, 138) shared between the at least two process paths (PP1, PP2) and a second group of sub-systems (134, 136) in which separate sub-systems are provided for the at least two process paths (PP1, PP2).

3. The method according to any one of the preceding claims, further comprising
comparing (414) the virtual process output data set (122) with threshold values.

4. The method according to any one of the preceding claims, further comprising, preceding the step of generating (404) the running scheme (120),
adding or removing (416) one or several of the virtual food processing components (204a-e).

5. The method according to any one of the preceding claims, further comprising, preceding the step of generating (404) the running scheme (120),
adding or removing (418) cleaning in place (CIP) steps.

6. The method according to any one of the preceding claims, further comprising, preceding the step of generating (404) the running scheme (120),
adding or removing (420) maintenance steps.

7. The method according to any one of the preceding claims, further comprising, preceding the step of generating (404) the running scheme (120),
changing (422) an order in which the plurality of food products (102a, 102b) is to be produced.

8. The method according to any one of the preceding claims, wherein the running scheme (120) comprises a food waste focused running scheme, an electrical energy focused running scheme, a machine break down risk focused running scheme, a minimum production time focused running scheme or a cleaning time focused running scheme.

9. The method according to any one of the preceding claims, wherein the recipe database (114) is communicatively connected to a recipe cloud (128) in turn connected to other recipe databases.

10. The method according to any one of the preceding claims, wherein the running scheme database (118) is communicatively connected to a running scheme cloud (130) in turn connected to other running scheme databases.

11. The method according to any one of the preceding claims, further comprising
generating (424) at least one alternative running scheme (121) based on the food processing steps (116),
executing (426) the at least one alternative running scheme (121) on the virtual food processing system (200),
capturing (428) at least one alternative virtual process output data set (123) from the execution performed in the virtual food processing system (200),
in case an alternative acceptance (125) of one of the at least one alternative virtual process output data sets (123) is received (430),
making (432) the one of the least one alternative running scheme (121) the running scheme (120) to be uploaded to the food processing system (100) such that this is configured in accordance to this one of the least one alternative running scheme (121).

12. A data processing system (119) comprising a processor (140) configured to perform the method of any one of claim 1 to 11.

13. The data processing system (119) according to claim 12, wherein the data processing system (119) comprises a data processing apparatus (111) communicatively connected to a recipe database (114) and/or a running scheme database (118).

14. The data processing system (119) according to claim 13, wherein the recipe data base (114) is communicatively connected to a recipe cloud (128) in turn communicatively connected to recipe databases of other data processing systems, and/or the running scheme database (118) is communicatively connected to a running scheme cloud (130) in turn communicatively connected to running scheme databases of other data processing systems.

15. A computer program product comprising instructions which, when the program is executed by a data processing system (119), cause the data processing system to carry out the method of any one of claim 1 to 11.
